# EUROPÄISCHE PATENTSCHRIFT

(11) **EP 3 171 535 B1**
(45) Veröffentlichungstag und Bekanntmachung des Hinweises auf die Patenterteilung: **08.08.2018**
(21) Anmeldenummer: 16199116.1
(22) Anmeldetag: 16.11.2016
(51) Int. Cl.: H04J 3/06, H02H 3/28, H02H 1/00, H02H 7/00

(54) **VERFAHREN ZUR SYNCHRONISIERTEN ERFASSUNG VON ZUR STEUERUNG VON DIFFERENTIALSCHUTZEINRICHTUNGEN ELEKTRISCHER ENERGIELEITUNGEN BENÖTIGTEN MESSDATEN**
METHOD FOR SYNCHRONIZED CAPTURE OF MEASUREMENT DATA REQUIRED FOR CONTROLLING DIFFERENTIAL PROTECTION DEVICES OF ELECTRICAL POWER LINES
PROCÉDÉ D'ENREGISTREMENT SYNCHRONISÉ DE DONNÉES DE MESURE NÉCESSAIRES À LA COMMANDE DES DISPOSITIFS DE PROTECTION DIFFÉRENTIELS DE CONDUITES D'ÉNERGIE ÉLECTRIQUE

(30) Priorität: 20.11.2015 AT 509892015
(43) Veröffentlichungstag der Anmeldung: 24.05.2017
(73) Patentinhaber: Sprecher Automation GmbH, 4020 Linz (AT)
(72) Erfinder: Aichhorn, Andreas, 4040 Linz (AT); Krammer, Harald, 4050 Traun (AT); Kern, Thomas, 4061 Pasching (AT)
(74) Vertreter: Patentanwaltskanzlei Hübscher

(56) Entgegenhaltungen:
- WO-A1-2015/116980
- MARGARET ANYAEGBU ET AL: "A sample-mode packet delay variation filter for IEEE 1588 synchronization", ITS TELECOMMUNICATIONS (ITST), 2012 12TH INTERNATIONAL CONFERENCE ON, IEEE, 5. November 2012 (2012-11-05), Seiten 1-6, XP032327785, DOI: 10.1109/ITST.2012.6425166 ISBN: 978-1-4673-3071-8
- SKEIE T ET AL: "Highly accurate time synchronization over switched Ethernet", EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, 15. Oktober 2001 (2001-10-15), Seiten 195-204vol.1, XP032155688, DOI: 10.1109/ETFA.2001.996369 ISBN: 978-0-7803-7241-2
- DAVID M E INGRAM ET AL: "Use of Precision Time Protocol to Synchronize Sampled-Value Process Buses", IEEE TRANSACTIONS ON INSTRUMENTATION AND MEASUREMENT, IEEE SERVICE CENTER, PISCATAWAY, NJ, US, Bd. 61, Nr. 5, 1. Mai 2012 (2012-05-01), Seiten 1173-1180, XP011440653, ISSN: 0018-9456, DOI: 10.1109/TIM.2011.2178676
- SCHEITERER R L ET AL: "Synchronization Performance of the Precision Time Protocol in Industrial Automation Networks", IEEE TRANSACTIONS ON INSTRUMENTATION AND MEASUREMENT, IEEE SERVICE CENTER, PISCATAWAY, NJ, US, Bd. 58, Nr. 6, 1. Juni 2009 (2009-06-01), Seiten 1849-1857, XP011255351, ISSN: 0018-9456

## Beschreibung

Die Erfindung bezieht sich auf ein Verfahren zur synchronisierten Erfassung von zur Steuerung von Differentialschutzeinrichtungen elektrischer Energieleitungen benötigten Messdaten, die zu Paketen zusammengefasst über paketvermittelnde Netze zwischen zwei Netzelementen übertragen werden, deren Uhren anhand gemessener Sende- und Empfangszeiten von zwischen den Netzelementen über das paketvermittelnde Netz übertragenen Synchronisiernachrichten synchronisiert werden.

Um bei Differentialschutzeinrichtungen elektrischer Energieleitungen die an den Enden der Energieleitung erfassten Messdaten für die Überwachung auswerten zu können, ist es erforderlich, nur gleichzeitig erfasste Messdaten miteinander zu vergleichen. Dies bedeutet, dass den Messstellen Uhren zugeordnet werden müssen, die zu synchronisieren sind, was insbesondere dann zu Schwierigkeiten führt, wenn die Datenübermittlung über paketvermittelnde Netze erfolgt, weil die Übertragungszeit in solchen paketvermittelnden Netzen von verschiedenen, beispielsweise von der Anzahl und Art der Netzknoten, dem jeweiligen Paketverkehr und der Priorität der zu übertragenden Datenpakete abhängigen Parametern bestimmt wird. Um diesen Schwierigkeiten zu begegnen, ist es bekannt (WO 2013/107896 A1), das Messdatenpaket im sendenden Netzelement mit einem Zeitstempel zu versehen und aus der Empfangszeit des empfangenden Netzelements sowie der mit dem Messdatenpaket übermittelten Sendezeit die Übertragungszeit zu ermitteln, sodass durch das empfangende Netzelement die jeweilige Übertragungszeit für die Bestimmung der zu vergleichenden Messdaten berücksichtigt werden kann. Voraussetzung hierfür ist allerdings eine Synchronisation der den beiden Netzteilen zugehörigen Uhren, was durch eine die Uhrzeit vorgebende Netzwerksuhr in an sich bekannter Weise über ein präzises Zeitprotokoll (PTP) bewerkstelligt wird, indem von der die Uhrzeit vorgebenden Uhr mit einem Zeitstempel versehene Synchronisiernachrichten gesendet werden, denen von den zu synchronisierenden Uhren der empfangenden Netzelemente die jeweilige Empfangszeit zugeordnet wird. Die Netzelemente mit den zu synchronisierenden Uhren senden dann eine Verzögerungsanforderung an das Netzelement mit der zeitvorgebenden Uhr, das die Empfangszeit dieser Verzögerungsanforderung rücksendet, sodass aus der Sende- und der Empfangszeit der Synchronisiernachricht und der Sende- und der Empfangszeit der Verzögerungsanforderung ein bestehender Unterschied zwischen den Uhrzeiten der die Uhrzeit vorgebenden Uhr und den Uhrzeiten der zu synchronisierenden Uhren ermittelt werden kann, allerdings nur unter der Voraussetzung eines ausreichend symmetrischen Übertragungsnetzes. Außerdem müssen die beteiligten Netzknoten zur Durchführung dieses Synchronisierverfahrens entsprechend ausgerüstet sein.

Der Erfindung liegt somit die Aufgabe zugrunde, ein Verfahren zur Synchronisation der Uhren zweier zur Steuerung einer Differentialschutzeinrichtung elektrischer Energieleitungen eingesetzten Netzelemente eines paketvermittelnden Netzes mit mehreren Knotenpunkten so auszugestalten, dass eine für den Differentialschutz ausreichende Uhrensynchronisation sichergestellt werden kann.

Ausgehend von einem Verfahren der eingangs geschilderten Art löst die Erfindung die gestellte Aufgabe dadurch, dass aus den Sende- und Empfangszeiten aufeinanderfolgender Synchronisiernachrichten die Zeitspannen einerseits zwischen den Sendezeiten und anderseits zwischen den Empfangszeiten und aus den Sende- und Empfangszeitspannen deren Differenz ermittelt und zur Synchronisation der Uhren lediglich jene Synchronisiernachrichten herangezogen werden, bei denen der absolute Wert der Differenz zwischen den Sende- und Empfangszeitspannen unter einem vorgegebenen Schwellwert liegt.

Unter der Voraussetzung eines tolerierbaren Gangunterschieds zwischen den Uhren der beiden Netzelemente kann durch die vorgeschlagenen Maßnahmen eine einfache Synchronisation der beiden Uhren vorgenommen werden, weil eine unterschiedliche Laufzeit aufgrund der Auswahl lediglich solcher Synchronisiernachrichten, die eine im Wesentlichen gleiche Laufzeit aufweisen, keine Rolle für die Synchronisation spielen. Je kleiner somit der Laufzeitunterschied und damit der Unterschied hinsichtlich der Zeitdifferenzen einerseits zwischen den Sendezeiten zweier aufeinanderfolgender Synchronisiernachrichten und anderseits zwischen deren Empfangszeiten ist, umso genauer kann die Uhrensynchronisation durchgeführt werden. Die zulässige Obergrenze dieser Unterschiede zwischen dem Sendeintervall und dem Empfangsintervall wird durch einen Schwellwert vorgegeben, der das für die Einhaltung eines bestimmten Toleranzbereichs einzuhaltende Maß für die Auswahl der für die Synchronisation der Uhren geeigneten Synchronisiernachrichten festlegt.

Da zur Erfassung der Laufzeitunterschiede aufeinanderfolgender Synchronisiernachrichten dem empfangenden Netzelement mit der zu synchronisierenden Uhr lediglich die genaue Sendezeit der Synchronnachricht vom sendenden Netzelement mitgeteilt werden muss und das empfangende Netzelement dieser Sendezeit die Empfangszeit zuzuordnen hat, kann die Synchronisation der beiden Uhren auch mit Hilfe von Netzen durchgeführt werden, die die Voraussetzungen für ein PTP-Protokoll nicht erfüllen.

Um eine adaptive Anpassung der Uhrzeitsynchronisation an die jeweiligen Netzbedingungen zu erreichen, kann die Differenz der Sende- und Empfangszeitintervalle mehrerer aufeinanderfolgender Synchronisiernachrichten gespeichert und von den unterhalb des vorgegebenen Schwellwerts liegenden Synchronisiernachrichten die mit dem jeweils kleinsten Differenzwert zwischen dem Sende- und dem Empfangsintervall zur Uhrensynchronisation ausgewählt werden.

Anhand der Zeichnung wird das erfindungsgemäße Verfahren näher erläutert. Es zeigen
- Fig. 1: ein schematisches Blockschaltbild einer Differentialschutzeinrichtung einer elektrischen Energieleitung und
- Fig. 2: ein die Uhrzeit tₛ der die Uhrzeit vorgebenden Uhr mit der Uhrzeit tₑ der zu synchronisierenden Uhr während der Übertragung von Synchronisiernachrichten in Beziehung setzendes Diagramm

Die Differentialschutzeinrichtung für eine elektrische Energieleitung 1 umfasst zwei Netzelemente 2, 3, in denen die Steuerung der für das Trennen der Energieleitung 1 vom übrigen Energienetz 4 vorgesehenen Schutzschalter 5, die Auswertung der für die Überwachung der Energieleitung 1 erforderlichen, von Messeinrichtungen 6 erfassten Messdaten, die Sender und Empfänger zur Übermittlung der zu Paketen zusammengefassten Messdaten und die Uhren zur Festlegung der Mess-, Sende- und Empfangszeiten zusammengefasst sind. Die Datenübertragung erfolgt über ein paketvermittelndes Netz 7. Sind die Uhren der beiden Netzelemente 2, 3 synchronisiert, so spielt die Laufzeit der Messdatenpakete keine Rolle, weil durch die Markierung der Messdatenpakete mit dem Sendezeitstempel durch die Uhr des jeweils sendenden Netzelements 2 bzw. 3 die gesendeten Messdaten zeitlich den Messdaten auf der Seite des empfangenden Netzelements 3 bzw. 2 zugeordnet werden können, um bei vorgegebenen Abweichungen die Energieleitung 1 durch ein Betätigen der Schutzschalter 5 vom Energienetz 4 abschalten zu können.

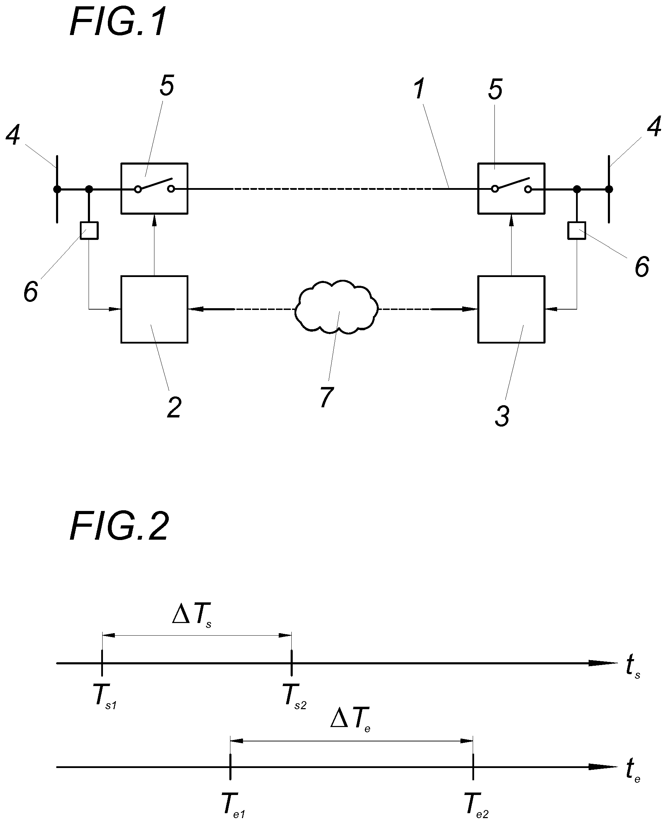

Wesentlich ist demnach eine ausreichende Synchronisierung der beiden Uhren der Netzelemente 2, 3. Zu diesem Zweck gibt die Uhr eines der beiden Netzelemente 2, 3 die Uhrzeit vor, der gegenüber die Uhr des jeweils anderen Netzelements synchronisiert wird. Im Falle des Ausführungsbeispiels nach der Fig. 1 wird angenommen, dass die Uhr des Netzelements 2 die Uhrzeit vorgibt, der gegenüber die Uhr des Netzelements 3 zu synchronisieren ist. Dementsprechend werden vom Netzelement 2 Synchronisiernachrichten mit den zugehörigen Sendezeiten über das paketvermittelnde Netz 7 an das Netzelement 3 übermittelt, wie dies der Fig. 2 näher entnommen werden kann, in der die Zeitachse der Uhr des die Synchronisiernachrichten sendenden Netzelements 2 mit tₛ und die Zeitachse der Uhr des empfangenden Netzelements 3 mit tₑ bezeichnet ist. Zur Uhrzeit Tₛ₁ der Uhr des Netzelements 2 sendet dieses eine Synchronisiernachricht über das paketvermittelnde Netz 7 an das Netzelement 3, das dieser Synchronisiernachricht die Empfangszeit T₁ₑ anhand der eigenen, zu synchronisierenden Uhr zuordnet. In gleicher Weise wird mit nachfolgenden Synchronisiernachrichten verfahren. In der Fig. 2 sind für eine folgende Synchronisiernachricht die Sendezeit Tₛ₂ und die Empfangszeit Tₑ₂ angegeben. Die von der jeweiligen Laufzeit abhängige Zeitdifferenz zwischen den Empfangszeiten Tₑ₁ und Tₑ₂ zweier Synchronisiernachrichten im Vergleich zur Zeitdifferenz zwischen deren Sendezeiten Tₛ₁ und Tₛ₂ lassen sich wie das Zeitintervall zwischen den Sendezeiten Tₛ₁ und Tₛ₂ aus den dem Netzelement 3 übermittelten Zeitstempeln zu ΔTₛ = Tₛ₂ - Tₛ₁ und den jeweils gemessenen Empfangszeiten zu ΔTₑ = Tₑ₂ - Tₑ₁ ermitteln.

Da aufgrund der Übertragung der Synchronisiernachrichten über ein paketbestimmendes Netz 7 mit unterschiedlichen Laufzeiten zu rechnen ist, werden nach der Erfindung zur Synchronisation der Uhr des Netzelements 3 nur jene Synchronisiernachrichten herangezogen, für deren Differenz ΔT der Sende- und Empfangsintervalle ΔTₛ und ΔTₑ gilt: ΔT = | ΔTₛ - ΔTₑ| ≤ S gilt, deren absoluter Wert also kleiner als ein vorgegebener Schwellwert S ist. Dies bedeutet, dass aufgrund der im Wesentlichen übereinstimmenden Laufzeiten Laufzeitunterschiede nur eine geringe Rolle spielen und die Genauigkeit der Synchronisation durch eine Auswahl von Synchronisiernachrichten mit entsprechend kleinen Differenzen ΔT adaptiv an die jeweiligen Übertragungsbedingungen im paketvermittelnden Netz angeglichen werden können. Zu diesem Zweck empfiehlt es sich, für mehrere aufeinanderfolgende Synchronisiernachrichten die Unterschiede der Sende- und Empfangsintervalle ΔT zu bestimmen und nur jene Synchronisiernachricht für die Uhrensynchronisation heranzuziehen, die die jeweils kleinste Differenz ΔT aufweist.

Die Laufzeitunterschiede können aber nicht nur für Synchronisiernachrichten vom Netzelement 2 zum Netzelement 3, sondern auch in entgegengesetzter Richtung vom Netzelement 3 zum Netzelement 2 bestimmt werden, indem die Differenzen der Sende- und der Empfangsintervalle für Synchronisiernachrichten in der entgegengesetzten Senderichtung erfasst werden, was eine bessere Angleichung an symmetrische Netze erlaubt.

## Patentansprüche

1. Verfahren zur synchronisierten Erfassung von zur Steuerung von Differentialschutzeinrichtungen elektrischer Energieleitungen (1) benötigten Messdaten, die zu Paketen zusammengefasst über paketvermittelnde Netze (7) zwischen zwei Netzelementen (2, 3) übertragen werden, deren Uhren anhand gemessener Sende- und Empfangszeiten (Tₛ₁, Tₛ₂, Tₑ₁, Tₑ₂) von zwischen den Netzelementen (2, 3) über das paketvermittelnde Netz (7) übertragenen Synchronisiernachrichten synchronisiert werden, **dadurch gekennzeichnet, dass** aus den Sende- und Empfangszeiten (Tₛ₁, Tₛ₂, Tₑ₁, Tₑ₂) aufeinanderfolgender Synchronisiernachrichten die Zeitspannen (ΔTₛ, ΔTₑ) einerseits zwischen den Sendezeiten (Tₛ₁, Tₛ₂) und anderseits zwischen den Empfangszeiten (Tₑ₁, Tₑ₂) und aus den Sende- und Empfangszeitspannen (ΔTₛ, ΔTₑ) deren Differenz (ΔT) ermittelt und zur Synchronisation der Uhren lediglich jene Synchronisiernachrichten herangezogen werden, bei denen der absolute Wert der Differenz (ΔT) zwischen den Sende- und Empfangszeitspannen (ΔTₛ, ΔTₑ) unter einem vorgegebenen Schwellwert (S) liegt.

2. Verfahren nach Anspruch 1, **dadurch gekennzeichnet, dass** die Differenz (ΔT) der Sende- und Empfangszeitspannen (ΔTₛ, ΔTₑ) mehrerer aufeinanderfolgender Synchronisiernachrichten gespeichert und von den unterhalb des vorgegebenen Schwellwerts (S) liegenden Synchronisiernachrichten die mit dem jeweils kleinsten Differenzwert (ΔT) zur Uhrensynchronisation ausgewählt wird.

## Claims

1. Method for the synchronised detection of measurement data which are required for controlling differential protection devices of electrical power lines (1) and are transmitted, combined into packets, via packet-switching networks (7) between two network elements (2, 3), the clocks of which are synchronised with the aid of measured transmitting times and receiving times (Tₛ₁, Tₛ₂, Tₑ₁, Tₑ₂) of synchronisation messages transmitted between the network elements (2, 3) via the packet-switching network (7), **characterised in that** the time periods (ΔTₛ, ΔTₑ) on the one hand between the transmitting times (Tₛ₁, Tₛ₂) and on the other hand between the receiving times (Tₑ₁, Tₑ₂) are ascertained from the transmitting times and receiving times (Tₛ₁, Tₛ₂, Tₑ₁, Tₑ₂) of consecutive synchronisation messages, and the difference (ΔT) therein is ascertained from the transmitting time periods and receiving time periods (ΔTₛ, ΔTₑ) and, in order to synchronise the clocks, only those synchronisation messages are used, in which the absolute value of the difference (ΔT) between the transmitting time periods and receiving time periods (ΔTₛ, ΔTₑ) is below a specified threshold value (S).

2. Method as claimed in claim 1, **characterised in that** the difference (ΔT) in the transmitting time periods and receiving time periods (ΔTₛ, ΔTₑ) of a plurality of consecutive synchronisation messages is stored and of the synchronisation messages which are below the specified threshold value (S) the one with the respectively smallest difference value (ΔT) with respect to the clock synchronisation is selected.

## Revendications

1. Procédé d'enregistrement synchronisé de données de mesure, nécessaires à la commande de dispositifs de protection différentiels de conduites d'énergie (1) électriques, qui sont transmises regroupées en paquets par le biais de réseaux (7) à communication par paquets entre deux éléments de réseau (2, 3) dont les horloges sont synchronisées à l'aide de temps d'émission et de réception (Ts1, Ts2, Te1, Te2) de messages de synchronisation transmis entre les éléments de réseau (2, 3) par le biais du réseau (7) à communication par paquets, **caractérisé en ce qu'**à partir des temps d'émission et de réception (Ts1, Ts2, Te1, Te2) de messages de synchronisation successifs sont déterminés les intervalles de temps, (ΔTs, ΔTe) d'une part entre les temps d'émission (Ts1, Ts2) et, d'autre part, entre les temps de réception (Te1, Te2), et à partir des intervalles de temps d'émission et de réception (ΔTs, ΔTe) est déterminée leur différence (ΔT), et seuls les messages de synchronisation, pour lesquels la valeur absolue de la différence (ΔT) entre les intervalles de temps d'émission et de réception (ΔTs, ΔTe) est en dessous d'une valeur seuil (S) prédéfinie, sont employées pour la synchronisation des horloges.

2. Procédé selon la revendication 1, **caractérisé en ce que** la différence (ΔT) des intervalles de temps d'émission et de réception (ΔTs, ΔTe) de plusieurs messages de synchronisation successifs est enregistrée et pour la synchronisation des horloges, celle avec la différence (ΔT) à chaque fois la plus petite est sélectionnée des messages de synchronisation en deçà de la valeur seuil (S) prédéfinie.
